Europäisches Patentamt

European Patent Office

Office européen des brevets

(19)

(11) Veröffentlichungsnummer: **0 081 874**
**B2**

(12) **NEUE EUROPÄISCHE PATENTSCHRIFT**

(45) Veröffentlichungstag der neuen Patentschrift:
**23.05.90**

(21) Anmeldenummer: **82201519.4**

(22) Anmeldetag: **01.12.82**

(51) Int. Cl.⁵: **A 47 J 19/02**, A 47 J 43/046,
A 47 J 42/56

(54) **Haushaltsgerät.**

(30) Priorität: **11.12.81 DE 3149072**

(43) Veröffentlichungstag der Anmeldung:
**22.06.83 Patentblatt 83/25**

(45) Bekanntmachung des Hinweises auf die
Patenterteilung:
**30.10.85 Patenblatt 85/44**

(45) Bekanntmachung des Hinweises auf die
Entscheidung über den Einspruch:
**23.05.90 Patentblatt 90/21**

(84) Benannte Vertragsstaaten:
**FR GB IT NL**

(56) Entgegenhaltungen:
EP-A-0 025 972
DE-A-2 817 044
DE-B-1 760 871
DE-C- 556 635
DE-C- 719 757
DE-U-1 713 808
FR-A-2 140 891
FR-A-2 388 505
JP-A-56 076 250
NL-C- 110 380

(73) Patentinhaber: **Braun Aktiengesellschaft
Rüsselsheimer Strasse 22
D-6000 Frankfurt/Main (DE)**

(72) Erfinder: **Gehrmann, Alfred
Berliner Strasse 15
D-6236 Eschborn (DE)**
Erfinder: **Guhr, Heinz
Wilhelmsbader Strasse 31
D-6457 Maintal 1 (DE)**
Erfinder: **Golob, Jürgen
Hugenottenstrasse 76-78
D-6382 Friedrichsdorf (DE)**
Erfinder: **Schäfer, Walter
Wolfsgangstrasse 105
D-6000 Frankfurt/Main (DE)**
Erfinder: **Franke, Wolfgang
Walter-Rietig Strasse 41
D-6070 Langen (DE)**

(74) Vertreter: **Einsele, Rolf
Braun Aktiengesellschaft Postfach 1120
Frankfurter Strasse 145
D-6242 Kronberg Taunus (DE)**

(56) Entgegenhaltungen:

"Getriebelehre ", Otto Kraemer, (1950)
"Bauelemente der Feinmechanik", Richter &
Voss, VEB-Verlag Technik, Berlin (1959)

EP 0 081 874 B2

## Beschreibung

Die Erfindung betrifft ein Haushaltsgerät zum Bearbeiten von Nahrungsmitteln, insbesondere Entsafter oder Vielzweckküchenmaschine, mit elektrisch angetriebenem, rotierenden Werkzeug nach dem Oberbegriff des Patentanspruch 1 oder 8.

Ein derartiges Haushaltsgerät ist beispielsweise aus der NL—C 110 380 bekannt. Bei diesem Haushaltsgerät handelt es sich um eine Kaffeemühle, bei der das mit einem rotierenden Messer ausgebildete Gehäuseunterteil mit einem darauf aufsetzbaren Deckel verschließbar ist. Die Kaffeemühle ist mit einer Sicherheitseinrichtung versehen, die im wesentlichen aus einem am Deckel ausgebildeten Riegelelement, einem in Aufsetzrichtung des Deckels auf das Geräteunterteil vom Riegelelement verschiebbaren Sperrelement und einem je nach Stellung des Sperrelements verriegelten bzw. freigegebenen Sperriegel bzw. Verschlußriegel, der mit einem elektrischen Drehschalter zur Stromversorgung des das Messer antreibenden Elektromotors gekoppelt ist, besteht.

Bei nicht aufgesetztem Deckel greift das Sperrelement in eine am Rand des Sperriegels ausgebildete Ausnehmung, so daß hierdurch eine Drehung des mit dem Sperriegel verbundenen Schalters nicht möglich ist. Erst nach Aufsetzen des Deckels auf das Geräteunterteil greift das mit dem Deckel verbundene Riegelelement in die Ausnehmung des Sperriegels ein und verschiebt dabei das Sperrelement derart, daß dieses aus der Ausnehmung nach unten herausgleitet und den Sperriegel zur Drehung freigibt. Mit der Drehung des Sperriegels verdreht sich ebenso die Ausnehmung, so daß der kreisförmige Rand des Sperriegels das Riegelelement von oben abdeckt und dadurch der Deckel in diesem Bereich fest mit dem Geräteunterteil verbunden ist. Bei weiterer Drehung des Sperriegels betätigt nun ein am Sperriegel ausgebildeter Zapfen den elektrischen Schalter, so daß die Kaffeemühle eingeschaltet wird.

Bei dieser Sicherheitsverriegelung für eine Kaffeemühle ist es von Nachteil, daß in Verriegelungsstellung der Deckel nur einseitig über das Riegelelement mit dem Sperriegel gegen Herausnehmen des Deckels gesichert ist. Dadurch kann nämlich der Deckel so schräg auf das Geräteunterteil aufgesetzt werden, daß danach dennoch, obwohl die Sicherheitseinrichtung entriegelt und der Sicherheitsschalter in seine Einschaltstellung gebracht wurde, der Deckel über die dem Riegelelement gegenüberliegende Seite aus dem Geräteunterteil herausgehoben werden kann. Dies hat zur Folge, daß auch bei abgenommenem Deckel die Kaffeemühle weiter in Betrieb bleibt, auch wenn der Deckel auf die vorbeschriebene Weise abgenommen worden ist. Hierdurch ist eine Verletzungsgefahr des Benutzers nicht ausgeschlossen. Ein weiterer Nachteil dieser Kaffeemühle besteht darin, daß das Sperrelement auch von Hand sehr leicht betätigt werden kann und dadurch bereits ohne aufgesetzten Deckel die Verriegelungseinrichtung entriegelt und durch Drehen des Schalters die Messer in Drehung versetzt werden können. Dies könnte zu nicht unerheblichen Verletzungen der Bedienungsperson führen.

Aus dem deutschen Gebrauchsmuster DE—U—17 13 808 ist ein weiteres als Wäschezentrifuge dienendes Haushaltsgerät bekannt, bei dem der Deckel zum Verschließen der Trommel verschwenkbar am Gehäuse befestigt ist. Der Deckel weist an seiner Unterseite ein Riegelelement auf, das beim Herunterklappen des Deckels in ein an einem Sperriegel ausgebildetes, gabelförmiges Ende eingreift und das beim Verschließen des Deckels den Sperriegel um seinen Lagerzapfen so weit verdreht, daß dabei das dem gabelförmigen Ende gegenüberliegende Ende des Sperriegels aus der Ausnehmung des mit einem Drehschalter verbundenen Sperrelements herausgleitet. Erst in dieser Stellung des Sperriegels wird die Drehung des Drehschalters zum Einschalten des mit der Schleudertrommel verbundenen Antriebsmotors möglich. Nachdem der Drehschalter in seine Einschaltstellung gebracht ist, kann der Deckel nicht mehr geöffnet werden, da der Sperriegel nun gegen Verdrehung gesichert ist. Dies wird dadurch erreicht, daß der Sperriegel am radial äußeren Rand des scheibenförmigen Sperrelements drehfest anliegt. Erst, wenn der Drehschalter in seine Nullstellung zurückgedreht wird, kann das Ende des Sperriegels beim Hochschwenken des Deckels wieder in die Ausnehmung des Sperrelements eingreifen. Dabei wird durch den Deckel der Sperriegel entgegen dem Uhrzeigersinn so weit gedreht, daß er das Riegelelement freigibt.

Bei diesem Haushaltsgerät besteht der Nachteil, daß über die am Gehäuseoberteil ausgebildete Öffnung, in die normalerweise das Riegelelement eingreift, eine Betätigung des Sperriegels von Hand möglich ist und dadurch bei noch offenem Deckel der Drehschalter des Haushaltsgerätes eingeschaltet werden kann. Ebenso kann beim Einfüllen von nassen Kleidungsstücken Wasser und Schmutz von oben über die Öffnung, in die das Riegelelement eingreift, in das Innere des Haushaltsgerätes eindringen, was zu Kurzschlüssen und Betriebsausfall führen kann. Ein weiterer Nachteil besteht darin, daß an dem Sperriegel keine Einrichtung vorgesehen ist, die diesen bei geöffnetem Deckel selbsttätig in seiner Ausgangsstellung hält, so daß eine Verdrehung des Drehschalters ausgeschlossen ist. Auch daß die Drehebene des Schalters senkrecht zur Drehebene des Deckels verläuft, erschwert die Handhabung des Haushaltsgeräts. Bei Küchenmaschinen, bei denen der Deckel erst auf einen Behälter aufgesetzt und anschließend zum Verschließen verdreht werden muß, ist diese Verriegelungseinrichtung überhaupt nicht anwendbar, da bereits beim Aufsetzen des Deckels, ohne daß er fest verschlossen auf dem Behälteraufsitzt, der Sperriegel den Drehschalter freigeben würde.

Aus der JP—A—56—76250 wird weiterhin eine Sicherheitsverriegelung für ein Haushaltsgerät vorgeschlagen, bei der in den Übertragungsweg vom Sperrelement zum Geräteschalter ein zusätzliches Rastgesperre mit drei Betätigungsknöpfen eingesetzt ist, durch das die Verschiebbarkeit der Betätigungsknöpfe in Abhängigkeit der Stellung des Deckels gesteuert wird. Durch den Einsatz dieses zusätzlichen Rastgesperres ergibt sich ein aufwendiger Schalteraufbau, was die Verwendung eines speziellen, nicht handelsüblichen Schalters erfordert und was somit die Herstellung der Küchenmaschine verteuert. Ebenso wird aufgrund der erhöhten Anzahl beweglicher Teile die Störanfälligkeit der Sicherheitsverriegelung und somit der Küchenmaschine vergrößert.

Dadurch, daß das am Sperriegel ausgebildete Sperrelement nicht mit dem aus dem Gehäuse der Schalteranordnung herausragenden Rastgesperre mechanisch fest verbunden ist, ergibt sich der Nachteil, daß, wenn das Rastgesperre einmal klemmt, — was bei Schaltern, deren Rastgesperre zum Einschalten des Schalters lediglich durch die Kraft einer Feder bewegt wird, häufiger vorkommen kann — die Küchenmaschine überhaupt nicht mehr einschaltbar ist. Dies kann beispielsweise dann sehr leicht auftreten, wenn die Schmierung am Rastgesperre ungenügend ist oder wenn beispielsweise bei niedergedrückten Betätigungsknopf, also bei Betrieb der Küchenmaschine, von einer person versucht wird, den Deckel vom Behälter durch Drehen zu trennen. Im letzteren Fall müssen nämlich die dabei auf das Rastgesperre und den Betätigungsknopf einwirkenden Kräfte zum einen von diesen Teilen selbst und zum anderen noch von dem Schaltergehäuse aufgefangen werden, d.h., die Schalteranordnung muß die Funktion eines Kraftübertragungsgliedes übernehmen. Die dabei auf die Schalteranordnung zwangsweise einwirkenden Kräfte können aber leicht zu einer geringen Verformung des Rastgesperres und somit zu einer Schwergängigkeit im Schaltergehäuse führen. Diese Schwergängigkeit des Rastgesperres kann aber bereits ausreichen, daß durch die Kraft der Rückstellfeder das Rastgesperre nicht mehr in seine Betriebsstellung verschoben wird, was den Ausfall der Küchenmaschine zur Folge hat.

Aufgabe der Erfindung ist es daher, ein Haushaltsgerät zu schaffen, das eine einfache, kostengünstige, robuste, leicht handhabbare und sicher arbeitende Verriegelungseinrichtung aufweist.

Gemäß der vorliegenden Erfindung werden zur Lösung dieser Aufgabe zwei Verriegelungskonstruktionen gemäß den kennzeichnenden Merkmalen der nebengeordneten Patentansprüche 1 und 8 vorgeschlagen. Die Unteransprüche 2 bis 7 bzw. 9 bis 12 geben vorteilhafte Weiterbildungen dieser Konzepte wieder.

Beide erfindungsgemäße Lösungen zeichnen sich durch einen einfachen und gleichzeitig robusten, funktionssicheren Aufbau aus. Ihnen ist gemeinsam, daß die Verriegelung sowohl einen mit Riegelelementen des Deckels als auch mit Sperrelementen des Geräteunterteils zusammenwirkenden, um eine gerätefeste Achse schwenkbaren Sperriegel bzw. Verschlußriegel enthält, der als ein um einen im Geräteunterteil angeordneten Lagerzapfen schwenkbarer, doppelarmiger Hebel ausgebildet ist und der über eine Kulissenanordnung mit dem elektrischen Geräteschalter gekoppelt ist.

In beiden Lösungsvarianten ist das Haushaltsgerät nur bei niedergedrücktem Deckel einschaltbar. In der ersten Lösungsvariante besteht der Verschlußriegel aus einem doppelarmigen Hebel, wobei bei eingeschaltetem Gerät der eine der beiden Hebelarme mit einem der beiden Riegelelemente und der andere Hebelarm mit dem anderen Riegelelement zusammenwirkt und wobei bei abgenommenem Deckel der eine Hebelarm mit einem der beiden Sperrelemente und der andere Hebelarm mit dem anderen Sperrelement zusammenwirkt. Hierdurch wird der Deckel beidseitig vom Verschlußriegel gegen das Gehäuseunterteil gedrückt. Eine Verriegelung ist also erst dann möglich, wenn beide Enden des Verschlußriegels in die beiden Ausnehmungen der Riegelelemente eingreifen. Hierdurch wird ein besonders sicherer und fester Sitz des Deckels am Geräteunterteil erreicht. Sobald der Geräteschalter in seine Nullstellung zurückgedreht wird, befindet sich auch der Verschlußriegel in seiner Ausgangsstellung, so daß der Deckel vom Gehäuseunterteil abnehmbar ist. Durch die doppelte Verriegelung des Deckels wird die Sicherheit des Haushaltsgerätes erheblich verbessert.

In einer Weiterbildung der Erfindung ist vorgesehen, daß die Riegelelemente am Deckel und die Sperrelemente am Gehäuseunterteil in Bewegungsrichtung des Deckels verschiebbar ausgebildet sind, daß die Sperrelemente durch Druckfedern entgegen der Schließrichtung des Deckels vorgespannt und als Auflager für die Riegelelemente ausgebildet sind und daß bei Niederdrücken des Deckels entgegen der Federkräfte die Sperrelemente soweit nach unten bewegt werden, daß der Verschlußriegel freigegeben wird und damit der Geräteschalter in seine Einschaltstellung gebracht werden kann, wobei mit der Drehung des Geräteschalters beide Arme des Verschlußriegels in das zugehörige Riegelelement eingreifen. Durch diese Anordnung wird erreicht, daß der Geräteschalter in seine Ausschaltstellung (Nullstellung) gedreht wird, der Deckel durch die vorgespannten Sperrelemente selbsttätig aufspringt und gleichzeitig die Sperrelemente den Verschlußriegel gegen Verdrehen sichern, wodurch gleichzeitig der Geräteschalter blockiert ist, d.h., daß er nicht mehr in seine Einschaltstellung gebracht werden kann.

Eine besonders einfach herzustellende und in ihrer Wirkungsweise stets sicher funktionierende Anordnung der Sperrelemente wird dadurch erreicht, daß die Auflager aus je einem in einer Führungshülse eines Auslegers des Geräteunterteils vertikal geführten Bolzen bestehen, der von der ihn in die Sperrstellung hebenden Druckfeder umgeben ist und an seinem oberen Ende einen Auflagerkopf aufw ist der inerseits die Auflagefläche für je ein Rie gelelement des Deckels bildet und andererseits zur Abstützung der Druckfeder dient. Die erfindungsgemäßen Auflager sind leicht herstellbar und dienen sowohl als Zentrierung als auch als Federspeicher für die Riegelelemente. Durch die teleskopartige Verschiebung der Auflager ist nur eine geringe Baulänge erforderlich.

Um ein Verdrehen des Verschlußriegels erst dann zu ermöglichen, wenn beide Riegelelemente gleichzeitig in den Sperriegel eingreifen, ist in einer Weiterbildung der Erfindung vorgesehen, daß die Riegelelemente säulenartige, mit das Eindringen der beiden freien Enden des Sperriegels ermöglichenden Riegelausschnitten versehene Körper sind, die vorzugsweise an diametral gegenüberliegenden Seiten des Deckels so angeordnet sind, daß sie mit beiden freien Enden des Verschlußriegels gleichzeitig zusammenwirken.

Damit der Geräteschalter, nachdem er durch Verdrehen des Verschlußriegels in seine erste Schaltstufe gelangt ist, in weitere Schaltstufen gebracht werden kann, ohne daß er dabei den Verschlußriegel weiter verdreht, ist erfindungsgemäß vorgesehen, daß an dem Verschlußriegel zur mechanischen Kopplung mit dem Geräteschalter eine Kulisse ausgebildet ist, die eine einen radial verlaufenden Abschnitt und einen kreisbogenförmig verlaufenden Abschnitt umfassende Aufnehmung aufweist, in die ein Stellzapfen eines dem Geräteschalter zugeordneten Stellhebels so eingreift, daß der Verschlußriegel durch Verdrehen des Geräteschalters im Einschaltsinne in seine Verriegelungsstellung und durch gegenläufiges Verdrehen des Geräteschalters im Ausschaltsinne in seine Offenstellung geschwenkt wird und daß der Eingriff des Stellzapfens in den kreisbogenförmigen Abschnitt der kulissenartigen Ausnehmung die Arretierung des Verschlußriegels in seiner Verriegelungsstellung zur Folge hat.

Um eine Trennung am Geräteschalter zwischen der Verriegelungsstufe und den Einschaltstufen zu erhalten, ist vorgesehen, daß der Geräteschalter den Antriebsstromkreis des Gerätes unterbricht, solange sein Stellzapfen in den radial verlaufenden Abschnitt eingreift und somit der Verschlußriegel seine Offenstellung einnimmt und daß der Geräteschalter den Antriebsstromkreis erst dann schließt, wenn der Stellzapfen in den kreisbogenförmig verlaufenden Abschnitt geschwenkt und somit der Verschlußriegel in seiner den Deckel verriegelnden Stellung arretiert ist.

Damit der Betreiber des Haushaltsgerätes spürbar die einzelnen Schaltstellungen am Geräteschalter merkt, ist nach einer Weiterbildung der Erfindung vorgesehen, daß ein dem Geräteschalter zugehöriges Rastgesperre die Schaltstellungen des Geräteschalters, in denen sein Stellzapfen entweder in den radial verlaufenden Abschnitt oder in den kreisbogenförmig verlaufenden Abschnitt der Kulisse eingreift, fühlbar festlegt.

Die zweite Lösungsvariante des erfindungsgemäßen Haushaltsgerätes zeichnet sich durch die besonders vorteilhafte Konzeption des zentralen Geräteschalters mit einer Verriegelungsrichtung aus, die darin besteht, daß der Geräteschalter als ein um eine Schalterwelle drehbarer Drehschalter ausgebildet ist und eine Kulisse aufweist, in die das Sperrelement eingreift, daß die Kulisse einen zur Schalterwelle radial verlaufenden und einen dazu konzentrisch verlaufenden Abschnitt aufweist, wobei der Eingriff des Sperrelements in den radial verlaufenden Abschnitt der Kulisse das Arretieren des Geräteschalters in der Ausschaltstellung des Gerätes bewirkt, während das Eintreten des Sperrelements in den konzentrisch verlaufenden Abschnitt der Kulisse den Geräteschalter für eine Drehbewegung freigibt, so daß dieser in mehrere Schaltstellungen gebracht werden kann, die verschiedenen Betriebszuständen des Haushaltsgerätes entsprechen. Bei dieser zweiten erfindungsgemäßen Lösung dient das Riegelelement nun zur 8etätigung des Sperriegels und zur drehfesten Halterung des Deckels, während zusätzliche Verschlußelemente den Deckel mit dem Behälter sicher verschließen. Mit nur wenig Bauteilen wird also ein einfacher Verriegelungsmechanismus geschaffen, bei dem der Sperrzapfen in eine am Schaltknebel des Geräteschalters angeformte Kulisse eingreift, wenn das Riegelelement außer Eingriff am Sperriegel steht. Der einzige Drehschalter ist über eine an ihm ausgebildete Kulisse direkt ohne Zwischenschaltung von zusätzlichen Bauteilen mit dem Sperrelement mechanisch gekoppelt.

Durch die nach der zweiten Lösung vorgegebene Ausgestaltung der Kulisse ergibt sich eine dauerhafte und stets sicher arbeitende Verriegelungseinrichtung, wodurch bei nur einem einzigen Geräteschalter eine besonders einfache, kostengünstige, leicht montierbare und stets sicher funktionierende Sicherheitsverriegelung gebildet wird. Die Hebellängen können aufgrund des doppelarmigen Hebels des Sperriegels so ausgelegt werden, daß auch mit höchster Handkraft ein Herausdrehen des Deckels nicht möglich ist wenn sich der Geräteschalter in einer seiner Einschaltstellungen befindet. Hierdurch wird eine besonders übersichtliche und gut handhabbare Bedienung des Geräteschalters erreicht. Ebenso wird die Montage der Verriegelungseinrichtung und des Schalters anschließend von oben her möglich.

Eine besonders einfache Herstellung des Riegelelements und einfache Handhabung der Küchenmaschine wird dadurch erreicht, daß das Riegelelement von einem am Deckel ausgebildeten Kupplungszapfen gebildet wird, der mit dem Drehen des Deckels in seine Endlage in eine am Sperriegel ausgebildete Kupplungsgabel eingreift und der dabei den Sperriegel um den im Geräteunterteil angeordneten Lagerzapfen entgegen einer den Sperriegel federnd in einer Sperrlage haltenden Speicherkraft in seine den Geräteschalter freigebende Stellung schwenkt. Der Kupplungszapfen wird gleichzeitig beim Spritzvorgang des aus Kunststoff hergestellten Deckels mit am Deckel angeformt. Hierdurch entstehen für die Herstellung des Kupplungszapfens keine zusätzlichen Kosten. Auch die Ausformung der am Sperrriegel ausgebildeten Kupplungsgabel erfordert keine zusätzlichen Kosten, da der Sperriegel ein aus Blech ausgestanztes Formteil ist. Damit der Sperriegel bei nicht aufgesetztem Deckel auch bei einwirkenden Erschütterungen oder Schräglage der Küchenmaschine nicht in die den Geräteschalter einschaltende Betriebsstellung gelangen kann, wird der Sperriegel durch eine Federkraft entgegen seiner Sperrlage gehalten.

Damit beim Drehen des Deckels ein Eingreifen des Kupplungszapfens in die Kupplungsgabel möglich ist, wird vorgeschlagen, dem Sperrriegel am Eingang zur Kupplungsgabel eine Steuerfläche anzuformen, die mit dem Kupplungszapfen bei Ausgangsstellung des Sperrriegels zusammenwirkt.

Um einen einfach herzustellenden Bajonettverschluß zwischen Deckel und Geräteunterteil herzustellen, ist es vorgesehen, die Verschlußelemente aus wenigstens einem am Rand des Deckels angebrachten Randabschnitt und einem am Rand des Geräteunterteils ausgebildeten Wulst zu bilden, wobei der Randabschnitt und der Wulst in der Endlage des Deckels bajonettverschlußartig ineinandergreifen und den Deckel am Geräteunterteil festhalten. Da beide Teile aus Kunststoff hergestellt sind, lassen sich der Randabschnitt und der Wulst problemlos an diesen Teilen anformen, ohne daß sich hierdurch bei der Herstellung des Deckels und des Behälters Mehrkosten ergeben.

Dadurch, daß die Drehebene des Geräteschalters im wesentlichen parallel zu denen des Sperrriegels und des Deckels verläuft, wird in vorteilhafter Weise erreicht, daß zum einen eine besonders flache Bauweise der Verriegelungseinrichtung möglich wird und daß zum anderen der Geräteschalter an der Oberseite der Küchenmaschine angeordnet werden kann, was zusätzlich die Bedienungsfreundlichkeit und Habung dieses Haushaltsgerätes verbessert.

Die Zeichnung veranschaulicht die beiden Erfindungsvarianten anhand von Ausführungsbeispielen in verschiedenen Schaltpositionen. Es zeigen

Figur 1 ein Haushaltsgerät mit einer Deckelverriegelung gemäß der ersten Variante der Erfindung,

Figur 2 dieselbe Deckelverriegelung in der Ausschaltstellung des Haushaltsgerätes bei abgenommenem Deckel,

Figur 3 dieselbe Deckelverriegelung bei auf das Haushaltsgerät aufgesetztem und niedergedrücktem Deckel,

Figur 4 dieselbe Deckelverriegelung bei verriegeltem Deckel und geschlossenem Geräteschalter,

Figur 5 ein Haushaltsgerät mit einer Deckelverriegelung gemäß der zweiten Variante der Erfindung im Längsschnitt,

Figur 6 eine Funktionsdarstellung des mit der Deckelverriegelung zusammenwirkenden Geräteschalters in der Sperrstellung,

Figur 7 eine Funktionsdarstellung des soeben freigegebenen Geräteschalters und

Figur 8 eine Funktionsdarstellung des in seine den Kurzzeitbetrieb des Haushaltsgerätes auslösende Schaltstellung überführten Geräteschalters.

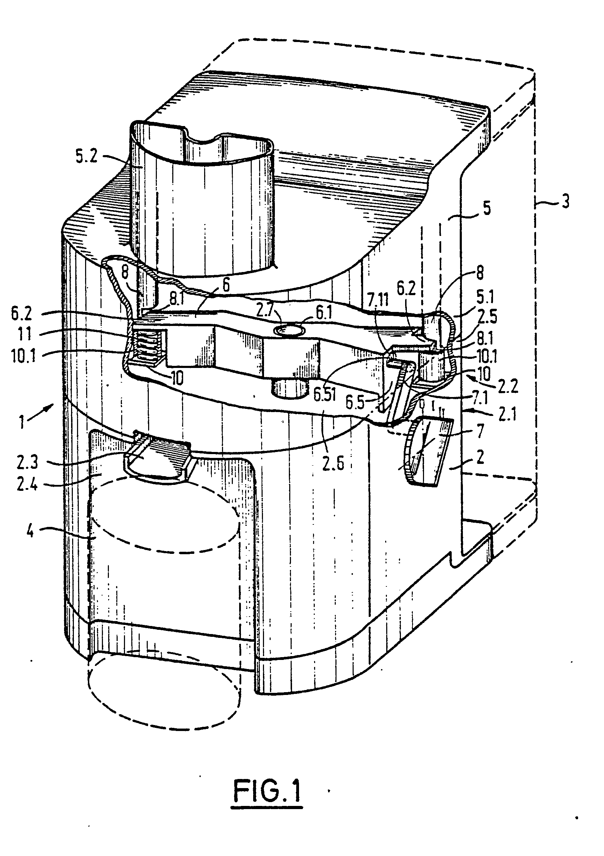

Wie die Figur 1 erkennen läßt, besteht das Haushaltsgerät gemäß der Erfindung — hier ein Entsafter 1 — aus einem Geräteunterteil 2, der den motorischen Antrieb für den in das Gerät einsetzbaren Siebkorb aufnimmt. Der Geräteunterteil 2 umfaßt außerdem an seiner Rückseite 2.1 eine Vertiefung 2.2, in die ein entsprechend geformtes Gefäß 3 einsetzbar ist. In dieses Gefäß wird der beim Entsaften anfallende Trester durch eine rückseitige Öffnung des Gerätes ausgeworfen. Der beim Entsaften gewonnene Obstoder Gemüsesaft fließt dagegen durch eine an der Vorderseite des Gerätes angeordnete Auslauftülle 2.3 in ein an das Gerät angesetztes Gefäß 4. Für das ordnungsgemäße Ansetzen dieses Gefäßes ist in den Geräteunterteil eine Mulde 2.4 eingeformt.

Dem Gerät ist ein Deckel 5 zugeordnet, der mit den Abschlußrändern seiner Seitenwandungen 5.1 auf die Stirnränder der entsprechenden Seitenwandungen 2.5 des Geräteunterteiles 2 aufgesetzt wird, und zwar derart, daß beide Geräteteile, also Geräteunterteil und Deckel bündig aufeinanderpassen und damit eine geschlossene Geräteeinheit bilden.

Dem Deckel 5 ist ein Einfüllstutzen 5.2 angeformt, durch den das zu bearbeitende Gut wie Obst, Gemüse etc. dem rotierenden Siebkorb des Gerätes zugeführt wird. Dieser Siebkorb einschließlich des ihn aufnehmenden und umgebenden Raumes befindet sich gemäß Figur loberhalb der Deckelverrfegelung. Er ist in der Zeichnung jedoch nicht dargestellt, da die Anordnung und Ausbildung dieser Bauteile des Entsafters einerseits allgemein bekannt und andererseits nicht Gegenstand der Erfindung sind.

Die Figur 1 läßt insbesondere die geräteseitige Anordnung und den Aufbau der Deckelverriegelung erkennen. Danach umfaßt diese Verriegelung einen Verschlußriegel 6, der hier auf einem im Geräteunterteil 2 zentrisch angeordneten und eine den Geräteunterteil 2 nach oben abschließende Deckplatte 2.6 durchdringenden Lagerzapfen 2.7 verschwenkbar angeordnet ist.

Der Verschlußriegel 6 besteht aus einem doppelarmigen Hebel, dessen mittlerer Teil als Lagerbuchse 6.1 ausgebildet ist. Diese ist auf dem Lagerzapfen 2.7 drehbar gelagert und durch an sich bekannte Mittel axial festgelegt.

Zum Verdrehen des so am Geräteunterteil 2 angeordneten Verschlußriegels 6 dient ein in eine Kulisse 6.5 desselben mittels seines Zapfens 7.11 eingreifender Stellhebel 7.1 der Schalthandhabe eines Geräteschalters 7. Der Geräteschalter 7 ist in drei Schaltstellungen überführbar, wovon die Schaltstellung "O" das Ausschalten, die Schaltstellung "I", das Verriegeln und die Schaltstellung "II" das Einschalten des dem Haushaltsgerät zugehörigen Antriebsmotors bewirkt. Beim Überführen des aus der Schaltstellung "II" in die Schaltstellung "I" kann zusätzlich das Abbremsen des Geräteantriebs bewirkt werden.

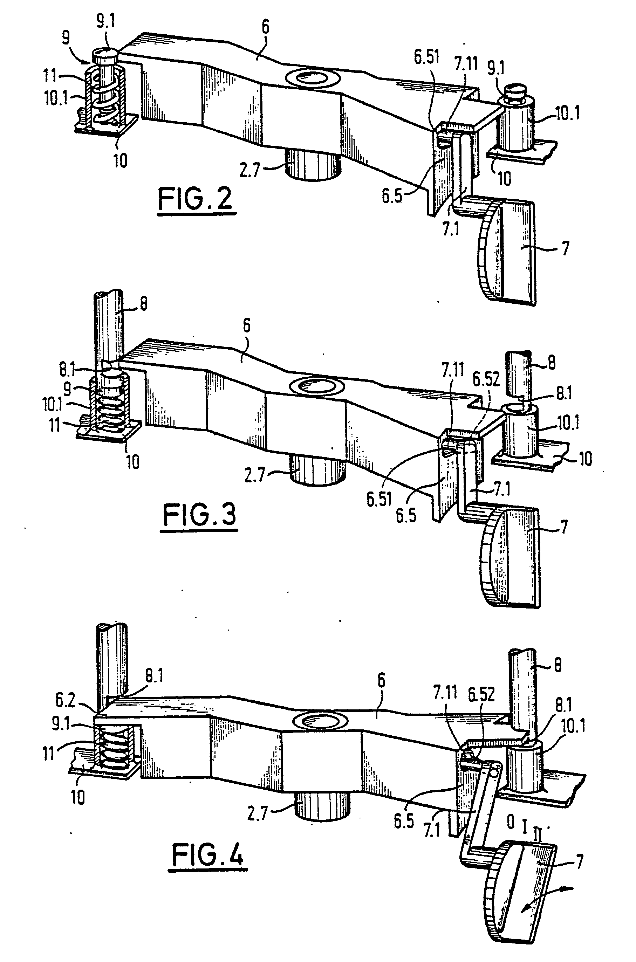

In der Schaltstellung "O" des Schalters 7 greift gemäß Figur 2 der diesem zugehörigen Stellhebel 7.1 mit seinem Stellzapfen 7.11 in einen zur Drehachse des Stellhebels radial verlaufenden Abschnitt 6.51 der kulissenseitigen Ausnehmung der dem Verschlußriegel 6 zugeordneten Kulisse 6.5 ein. In dieser Stellung befindet sich der Verschlußriegel 6 in der Ausgangsstellung, in der er außer Eingriff mit zwei dem Deckel 5 zugehörigen Riegelelementen 8 ist (Figur 1). Diese Riegelelemente 8 sind hier — als säulenartige, mit Riegeleinschnitten 8.1 versehene Körper — an diametral gegenüberliegenden Seiten des Deckels 5 so angeordnet, daß sie mit den beiden freien Enden 6.2 des Verschlußriegels 6 gleichzeitig zusammenwirken.

Beim Aufsetzen des Deckels 5 auf das offene Gerät 1, also auf den Geräteunterteil 2, kommen die beiden deckelseitigen Riegelelemente 8 auf zwei ihnen geometrisch zugeordnete bolzenförmige Auflager 9 zu liegen. Diese beiden Auflager 9 sind von je einem Ausleger 10 des Geräteunterteiles 2 aufgenommen, wobei ihnen zugeordnete Führungshülsen 10.1 je ein Auflager 9 gemeinsam mit einer dieses Auflager umgebenden Druckfeder 11 aufnehmen. Diese Druckfedern 11 stützen sich einerseits gegen den Boden der hülsenartigen Ausleger 10, 10.1 und andererseits gegen die Unterseite der die bolzenförmigen Auflager 9 nach oben abschließenden Auflagerköpfe 9.1 ab. Die Druckfedern 11 sind so bemessen, daß sie allein durch das Gewicht des auf die Köpfe 9.1 der Auflager 9 aufgesetzten Deckels 5 nicht zusammengedrückt werden. Dies hat zur Folge, daß bei lediglich auf den Geräteunterteil 2 lose aufgesetztem Deckel 5 dessen auf den Köpfen 9.1 der Auflager 9 aufliegende Riegelelemente 8 nicht in die Riegelebene des Verschlußriegels 6 gelangen können. Der auf das Gerät lose aufgesetzte Deckel 5 läßt sich sonach nicht am Geräteunterteil 2 verriegeln, da der Verschlußriegel 6 durch die Köpfe 9.1 der noch in der Sperrstellung befindlichen Auflager 9 an einem Verschwenken in die Riegelstellung gehindert wird.

Zum Verriegeln muß vielmehr der Deckel 5 gegen den Druck der Federn 11 gemäß Figur 3 nach unten gedrückt werden, wobei seine Riegelelemente 8, 8.1 in die Riegelebene, nämlich in die Verdrehungsebene des Verschlußriegels 6 gelangen. Dieses Niederdrücken des Deckels 5 in die Verriegelungsebene (und ebenso dessen Abheben aus dieser Ebene) ist nur möglich, wenn der Schalter 7 sich in der mit "O" bezeichneten Ausgangsstellung befindet. In dieser Stellung greift nämlich — wie bereits erwähnt — sein Stellhebel 7.1 in den radial verlaufenden Abschnitt 6.51 der Ausnehmung der dem Verschlußriegel 6 zugehörigen Kulisse 6.5 ein, wobei sich der Verschlußriegel 6 zwangsläufig in der Offenstellung befindet.

Wird bei weiterhin niedergedrücktem Deckel 5 der Schalter 7 gemäß Figur 3 im Uhrzeigersinn gedreht, so wandert der Stellzapfen 7.11 seines Stellhebels 7.1 — die Kulisse 6.5 des Verschlußriegels 6 im entgegengesetzten Drehsinne mitnehmend — in dem radial verlaufenden Abschnitt 6.51 gemäß Figur 4 nach rechts, bis er schließlich — nach Beendigung des Schaltvorganges, also bei Erreichen der mit "I" bezeichneten Schaltstellung — voll in den kreisbogenförmig verlaufenden Abschnitt 6.52 der kulissenseitigen Ausnehmung eintritt. Durch diesen Schaltvorgang wird infolge des Zusammenwirkens des Stellzapfens 7.11 mit dem Abschnitt 6.51 der kulissenseitigen Ausnehmung der Verschlußriegel 6 um den Lagerzapfen 2.7 entgegen dem Uhrzeigersinn in seine Verriegelungsstellung geschwenkt, wobei seine beiden freien Enden gemäß Figur 1 und 4 in die beiden Riegeleinschnitte 8.1 des Deckels 5 eingreifen und diesen damit am Geräteunterteil 2 festhalten.

Wie die Figur 1 erkennen läßt, kommen hierbei die Stirnflächen der Deckelseitenwandungen 5.1 auf den ihnen zugewandten Stirnflächen der Seitenwandungen 2.5 des Geräteunterteiles 2 abdichtend zur Auflage, wobei diesen Stirnflächen zugeordnete, sich gegenseitig ergänzende Ausschnitte durch labyrinthartiges Ineinandergreifen für ein paßgerechtes Aufsetzen des Deckels 5 auf den Geräteunterteil sorgen.

In der mit "I" bezeichneten Schaltstellung ist sonach der Deckel 5 am Geräteunterteil 2 verriegelt. Der Gerätemotor ist in dieser Schaltstellung jedoch noch nicht eingeschaltet. Dies geschieht erst nach einem weiteren Verdrehen des Schalters 7 in die mit "II" bezeichnete Schaltstellung. Während dieses Schaltvorganges durchwandert der Stellzapfen 7.11 des schalterseitigen Stellhebels 7.1 den kreisbogenförmigen Abschnitt 6.52 der Ausnehmung der Kulisse 6.5. Eine Mitnahme der Kulisse 6.5 durch den Stellzapfen 7.11 erfolgt jedoch hierbei nicht, so daß der Verschlußriegel 6 in seiner Schließstellung verbleibt. Die Inbetriebnahme des mit der erfindungsgemäßen Deckelverriegelung ausgestatteten Haushaltsgerätes erfolgt sonach stets bei geschlossenem Deckel allein durch Betätigen des einzigen Geräteschalters 7.

Die gleiche Betriebssicherheit ist auch beim Ausschalten und anschließendem Öffnen des Gerätes gegeben. Durch Rückdrehen des Schalters 7 (entgegen dem Uhrzeigersinn) aus der mit "II" in die mit "I" bezeichnete Schaltstellung durchwandert der Stellzapfen 7.11 wieder den kreisförmigen Abschnitt 6.52 der Ausnehmung der Kulisse 6.5, wobei der Verschlußriegel 3 in seiner den Deckel 2 am Gerät 1 festlegenden Schließstellung verbleibt. Durch dieses Rückschalten des Geräteschalters mittels des Schalters 7 in die mit "I" bezeichnete Schaltstellung wird vorzugsweise nicht nur der Motorstromkreis unterbrochen, sondern darüber hinaus der Antriebsmotor elektrisch und/oder mechanisch abgebremst, so daß er in kürzester Zeit zum Stillstand kommt.

Erst nach dem Stillsetzen des geräteseitigen Antriebs wird dann durch weiteres Zurückschalten des Schalters 7 in die mit "O" bezeichnete Schaltstellung die Deckelverriegelung aufgehoben. Dies geschieht durch das Eindringen des Stellzapfens 7.11 des schalterseitigen Stellhebels 7.1 in den radial verlaufenden Abschnitt 6.51 der kulissenseitigen Ausnehmung, aus dem die Mitnahme der Kulisse 6.5 und damit auch das im Uhrzeigersinn erfolgende Zurückschwenken des Verschlußriegels 6 in die Offenstellung resultiert (Figur 3).

In der so erhaltenen Offenstellung des Verschlußriegels 6 gelangen nach dem Abheben des Deckels 5 die Auflager 9 infolge der Einwirkung der Druckfedern 11 wieder in ihre angehobene Sperrstellung, in der sie ein Verschwenken des Verschlußriegels 6 in seine Schließstellung verhindern. Der Geräteschalter 7 läßt sich sonach nicht im Einschaltsinne verdrehen, da er durch den Eingriff seines Stellzapfens 7.11 in die nach alledem nicht mehr verschwenkbare Kulisse 6.5 des Verschlußriegels 6 daran gehindert wird.

Der Verschlußriegel 6 kann auch mehr als zwei Arme umfassen. Diese sind dann vorzugsweise symmetrisch zueinander angeordnet und wirken demzufolge mit im stets gleichen Abstand voneinander angeordneten Riegelelementen 8 des Deckels 5 bzw. mit den entsprechend angeordneten, als Sperrelemente wirkenden Auflagern 9 des Geräteunterteils 2 funktionsgerecht zusammen.

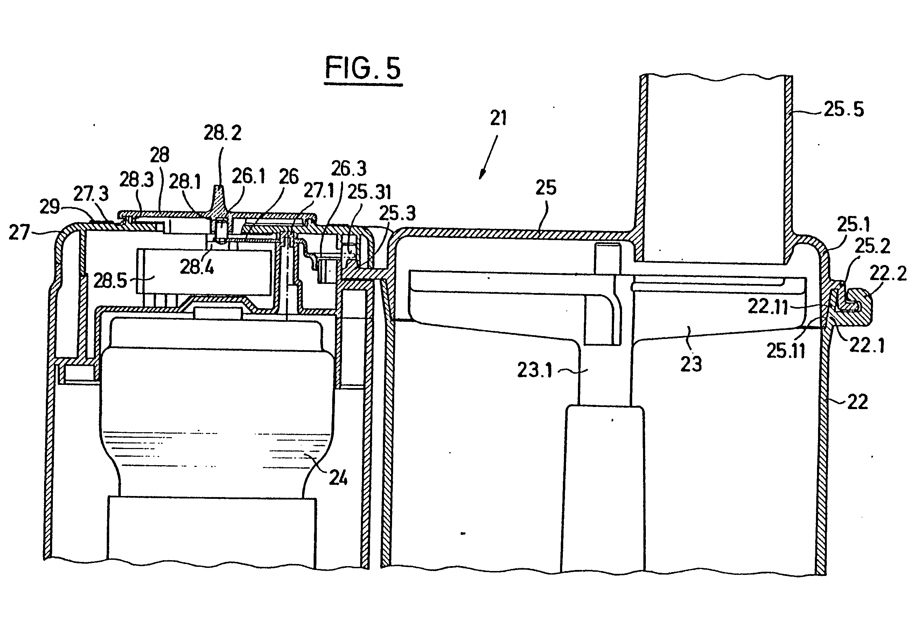

Das in den Figuren 5 bis 8 dargestellte Haushaltsgerät 21 gemäß der zweiten Variante der Erfindung besitzt ebenfalls einen als Behälter für das zu bearbeitende Gut ausgebildeten Geräteunterteil 22, im dem ein in einem nicht dargestellten Gerätesockel gelagertes Schneid- oder Reibwerkzeug 23 rotiert. Dieses Schneidoder Reibwerkzeug wird durch einen Elektromotor 24 angetrieben, der hier seitlich neben dem Geräteunterteil 22 angeordnet ist. Die getriebliche Verbindung zwischen der nicht sichtbaren Antriebswelle des Elektromotors 24 und dem rotierenden Werkzeug 23 geschieht hier mittels eines dessen Welle 23.1 umschlingenden Treibriemens.

Dem Haushaltsgerät 21 ist nun ein Deckel 25 mit einem Einfüllstutzen 25.5 zugeordnet, der mittels seiner Seitenwandung 25.1 konusartig auf die ihm zugewandte Seitenwandung 22.1 des Geräteunterteils 22 aufsetzbar ist. Der dem Außenkonus 25.11 der deckelseitigen Seitenwandung 25.1 angepaßte Innenkonus 22.11 der geräteseitigen Seitenwandung 22.1 bewirkt ein sicheres Verschließen des Geräteunterteils 22 durch den aufgesetzten Deckel 25.

Dem Deckel 25 ist wenigstens ein abgekröpfter Randabschnitt 25.2 als Außenbajonett angeformt, der in der gebrauchsgerechten Aufsetzlage des Deckels in wenigstens eine ihn als Innenbajonett käfigartig umgebende Wulst 22.2 des Geräteunterteils 22 eingreift.

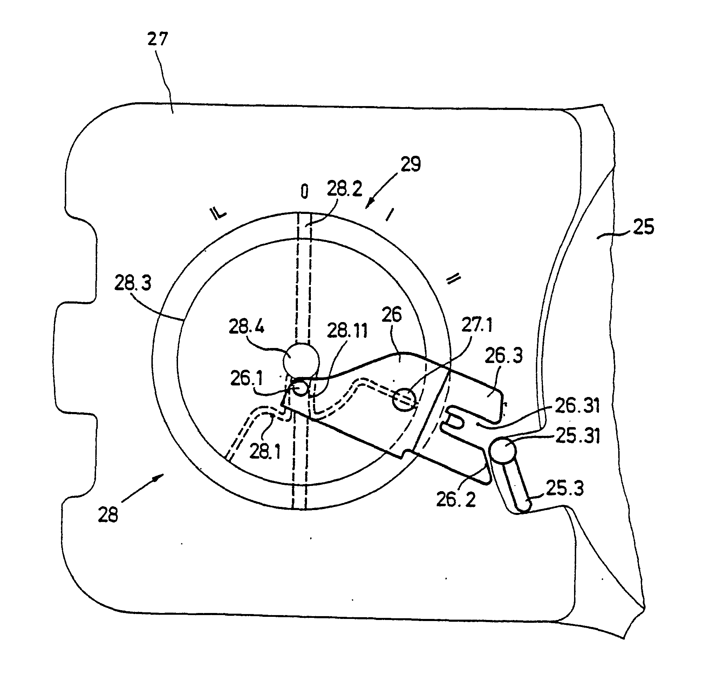

Ferner wirkt ein umfangsseitiges Steuerglied 25.3 des Deckels 25 mittels seines Kupplungszapfens 25.31 mit einem doppelarmigen Sperriegel 26 zusammen der auf einem gerätefesten Zapfen 27.1 des Gehäuses der Antriebseinheit 27 des Haushaltsgerätes 21 drehbar gelagert ist. Der Sperriegel 26 weist ferner einen Sperrzi apfen 26.1 auf der in eine dem Zentralschalter 28 des Haushaltsgerätes 21 angeformte Kulisse 28.1 eingreift. Der Schalter 28 ist mit einem ihm angeformten Lagerring 28.3 in einem ringförmigen Lager 27.3 des Gehäuses der Antriebseinheit 27 drehbar gelagert und umfaßt eine die elektrischen Schaltelemente aufweisende Einheit 28.5, mit der er durch eine Schaltwelle 28.4 getrieblich verbunden ist. Der Schalter 28 läßt sich mittels eines ihm angeformten, in den Figuren 6 bis 8 der besseren Übersicht wegen gestrichelt dargestellten Knebels 28.2 gegenüber einer gerätefesten Skala 29 in vier Schaltstellungen verdrehen. Davon entspricht die mit "O" bezeichnete Schaltstellung der Ausschaltstellung, die mit "IL" bezeichnete Schaltstellung dem Kurzzeitbetrieb des Haushaltsgerätes, die mit "I" bezeichnete Schaltstellung dem Normal-Betrieb und die mit "II" bezeichnete Schaltstellung dem Betrieb des Haushaltsgerätes 21 mit niedrigerer Drehzahl.

Bei offenem Geräteunterteil 22 des Haushaltsgerätes 21 nimmt der Sperriegel 26 unter Einwirkung einer nicht dargestellten Speicherkraft die in Figur 6 dargestellte Sperrlage ein. In dieser Lage greift sein Sperrzapfen 26.1 in einen im wesentlichen radial verlaufenden Abschnitt 28.11 der dem Schalter 28 angeformten Kulisse 28.1 ein. Der Schalter 28 ist sonach gegen ein Verdrehen aus seiner in Figur 6 dargestellten Ausschaltstellung gesperrt, die hier mittels seines auf die Marke "O" der Skala 29 gerichteten Schaltknebels 28.2 angezeigt wird.

Soll das Haushaltsgerät in Betrieb genommen werden, so muß zunächst der Deckel 25 mit dem ihm angeformten Einfüllstutzen 25.5 auf den Geräteunterteil 22 aufgesetzt und mit diesem verriegelt werden. Hierzu wird der Deckel 25 soweit gegenüber dem Innenbajonett 22.2 auf den Geräteunterteil 22 verdreht aufgesetzt, daß nach seinem Aufsetzen durch sein anschließendes Zurückdrehen in die Gebrauchslage sein Außenbajonett 25.2 seitlich in das zugehörige Innenbajonett 22.2 des Geräteunterteils 22 eingreift. Damit ist der Deckel 25 am Geräteunterteil verriegelt.

Beim Aufsetzen des Deckels nimmt das ihm angeformte Steuerglied 25.3 zunächst die in Figur 6 dargestellte Lage ein, in der zumindest sein Kupplungszapfen 25.31 einer Sperrfunktion ausübenden Steuerfläche 26.2 des als Kupplungsgabel ausgebildeten rechten Armes 26.3 des Sperriegels 26 unmittelbar benachbart ist und diesen demzufolge an einem Verschwenken aus seiner Sperrstellung gemäß Figur 6, also entgegen dem Uhrzeigersinn hindert.

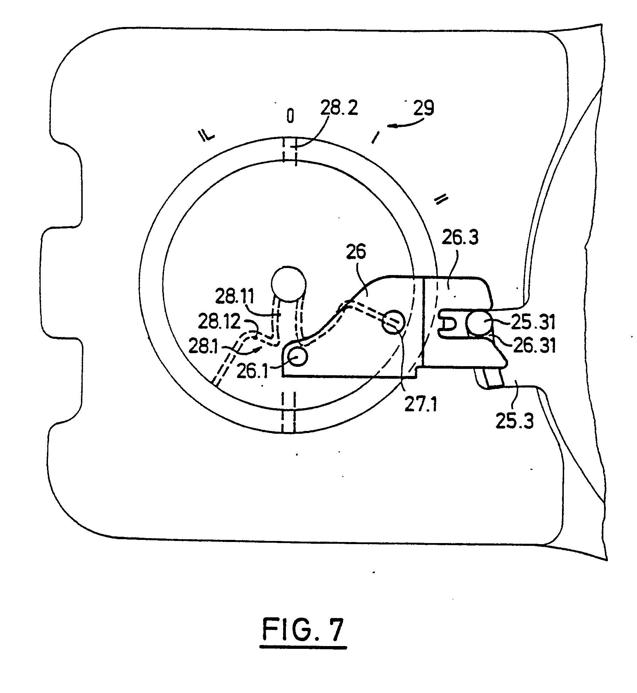

Durch das anschließende Verdrehen des Deckels 25 in seine Gebrauchsstellung also im Uhrzeigersinn gelangt der Kupplungszapfen 25.31 seines Steuergliedes 25.3 in die in Figur 7 dargestellte Verriegelungsstellung. Während dieser Drehbewegung dringt der Kupplungszapfen 25.31 in den Ausschnitt 26.31 der Kupplungsgabel 26.3 des Sperriegels 26 ein und verschwenkt diesen dabei um den Lagerzapfen 27.1 entgegen dem Uhrzeigersinn. Dessen Sperrzapfen 26.1 tritt hierbei aus dem Sperrfunktion ausübenden Abschnitt 28.11 der schalterseitigen Kulisse 28.1 heraus und gibt damit den Schalter 28 für das Verdrehen in seine unterschiedlichen, durch die Skala 29 markierten Schaltstellungen frei. Das Haushaltsgerät 21 kann sonach durch Einstellen des Schaltknebels 28.2 des Schalters 28 auf die drei Marken "IL", "I" oder "II" der gerätefesten Skala 29 — wie vorbeschrieben — in unterschiedlicher Weise in Betrieb genommen werden.

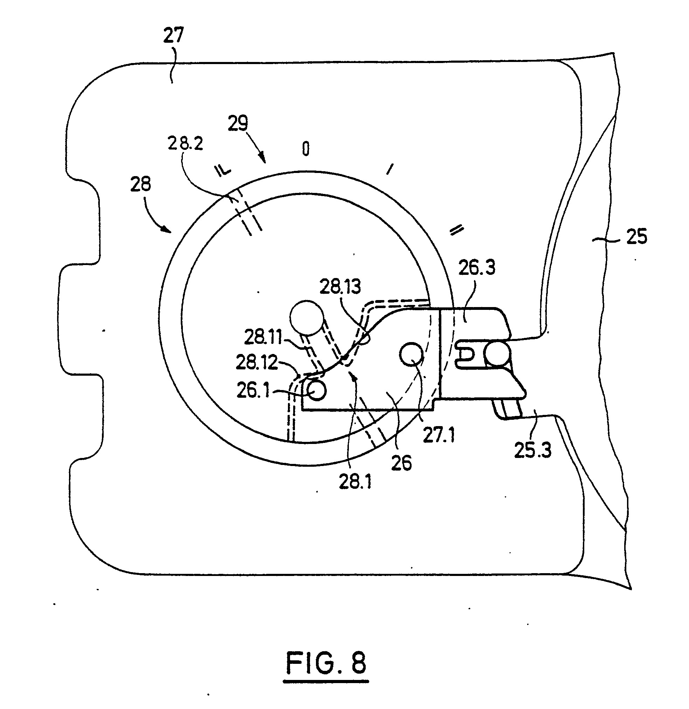

Ein Abheben des Deckels 25 vom Geräteunterteil 22 ist während des Betriebs des Haushaltsgerätes 21 nicht möglich, da — wie Figur 8 anschaulich zeigt — beispielsweise in der den Kurzzeitbetrieb ermöglichenden Schalterstellung "IL" des Geräteschalters 28 der Sperrzapfen 26.1 des Sperriegels an dem kreisbogenförmig verlaufenden Abschnitt 28.12 der schalterseitigen Kulisse 28.1 anliegt, so daß der Sperriegel 26 durch den kulissenseitigen Abschnitt 28.12 an einem das Entriegeln des Deckels 25 ermöglichenden Verschwenken im Uhrzeigersinn gehindert wird.

Das gleiche geschieht bei Einstellung des Schalters 28 auf die durch die beiden Markierungen "I" und "II" gekennzeichneten Betriebsarten, da in den betreffenden Schalterstellungen der Sperrzapfen 26.1 des Sperriegels 26 an dem ebenfalls kreisbogenförmig verlaufenden Abschnitt 28.13 der schalterseitigen Kulisse 28.1 sperrend zur Anlage kommt.

Zum Abheben des Deckels 25 vom Geräteunterteil 22 muß vielmehr der Schatter 28 wieder in seine Ausschaltstellung (Markierung "O") gedreht werden, wodurch der Sperriegel 26 durch Eingriff seines Sperrzapfens 26.1 in den kulissenseitigen Abschnitt 28.11 wieder im Uhrzeigersinn verschwenkbar ist und infolgedessen das Verdrehen des Deckels entgegen dem Uhrzeigersinn aus dem Bajonetteingriff 25.2, 22.2 mit dem Geräteunterteil 22 möglich wird. Danach kann der Deckel 25 zwecks Entnahme des bearbeiteten Gutes vom Geräteunterteil 22 abgenommen werden.

Bezugszeichen — Liste zu O4 873 ff
1. Entsafter
2. Geräteunterteil
  2.1 Rückseite von 2
  2.2 Vertiefung in 2.1
  2.3 Auslauftülle
  2.4 Mulde in 2
  2.5 Seitenwandungen von 2
  2.6 Deckplatte von 2
  2.7 Lagerzapfen in 2
3. Gefäß
4. Gefäß
5. Deckelteil
  5.1 Seitenwandungen von 5
  5.2 Einfüllstutzen
6. Verschlußriegel
  6.1 Lagerbuchse an 6
  6.2 freie Enden von 6
  6.5 Kulisse an 6
  6.51 1. Abschnitt von 6.5 (radial)
  6.52 2. Abschnitt von 6.5 (kreisbogenförmig)
7. Geräteschalter
  7.1 Stellhebel an 7 für 6.5

  7.11 Stellzapfen an 7.1
8. Riegelelemente an 5
  8.1 Riegeleinschnitte in 8
9. Auflager
  9.1 Auflagerkopf
10. Ausleger von 2
  10.1 Führungshülse von 10
11. Druckfedern in 10 bzw. 10.1
21. Haushaltsgerät
22. Geräteunterteil
  22.1 Seitenwandung von 22
  22.11 Innenkonus von 22.1
  22.2 Wulst (Außenbajonett) an 22.1
23. Schneid- bzw. Reibwerkzeug
  23.1 Welle von 23
24. Elektromotor (Antrieb) in 21
25. Deckelteil von 21
  25.1 Seitenwandung von 25
  25.11 Außenkonus an 25.1
  25.2 abgekröpfter Randabschnitt (Außenbajonett) an 25, deckelseitiger Teil des Verschlußriegels
  25.3 Steuerglied an 25
  25.31 Kupplungszapfen an 25.3
  25.5 Einfüllstutzen an 25
26. Sperriegel
  26.1 Sperrzapfen an 26
  26.2 Steuerfläche an 26, mit 25.3 zusammenwirkend
  26.3 Kupplungsgabel (rechter Arm von 26)
  26.31 Kupplungsausschnitt von 26.3
27. Antriebseinheit von 21
  27.1 gerätefester Lagerzapfen für 26
  27.3 Lagerung an 27 für 28
28. Geräteschalter
  28.1 Kulisse an 28
  28.11 Sperrfunktion ausübender radialer Abschnitt von 28.1
  28.12 1. kreisbogenförmiger Abschnitt von 28.1 "IL"
  28.13 2. kreisbogenförmiger Abschnitt von 28.1 "I, II"
  28.2 Schaltknebel an 28
  28.3 Lagerring an 28
29. Skala für 28

**Patentansprüche**

1. Haushaltsgerät (1) mit einem Geräteschalter (7) zum Ein- bzw. Ausschalten eines von einem Elektromotor angetriebenen, rotierenden Werkzeuges, mit einem das Geräteunterteil (2) verschließenden und vor Betriebsbeginn mit diesem verriegelbaren Deckel (5), wobei die Deckelverriegelung einen Verschlußriegel (6) aufweist, der entweder über ein Riegelelement (8) den Deckel (5) verriegelt oder der über ein Sperrelement (9) den Geräteschalter (7) sperren kann, wobei der Deckel (5) gegen eine Vorspannung des Sperrelements (9) niedergedrückt werden muß und wobei der Verschlußriegel (6) mit dem Geräteschalter (7) derart gekoppelt ist, daß das Einschalten des Geräteantriebs durch den Geräteschalter (7) nur bei verriegeltem Deckel (5) möglich ist und daß bei abgenommenem Deckel (5) der Geräteschalter (7) in seiner Ausschaltstellung gesperrt ist, dadurch gekennzeichnet, daß das Haushaltsgerät (1) nur bei Niedergedrücktem Deckel (5) einschaltbar ist, daß der Verschlußriegel (6) aus einem doppelarmigen Hebel besteht, wobei bei eingeschaltetem Gerät (1) der eine der beiden Hebelarme (6.2) mit einem der beiden Riegelelemente (8) und der andere Hebelarm (6.2) mit dem anderen Riegelelement (8) zusammenwirkt und wobei bei abgenommenem Deckel (5) der eine Hebelarm (6.2) mit einem der beiden Sperrelemente (9) und der andere Hebelarm (6.2) mit dem anderen Sperrelement (9) zusammenwirkt.

2. Haushaltsgerät nach Anspruch 1, dadurch gekennzeichnet, daß die Riegelelemente (8) am Deckel (5) und die Sperrelemente (9) am Gehäuseunterteil (2) in Bewegungsrichtung des Deckels (5) verschiebbar ausgebildet sind, daß die Sperrelemente (9) durch Druckfedern (11) entgegen der Schließrichtung des Deckels (5) vorgespannt sind und als Auflager für die Riegelelemente (8) ausgebildet sind und daß bei Niederdrücken des Deckels (5) entgegen der Federkräfte die Sperrelemente (9) soweit nach unten bewegt werden, daß der Verschlußriegel (6) freigegeben wird und damit der Geräteschalter (7) in seine Einschaltstellung gebracht werden kann, wobei mit der Drehung des Geräteschalters (7) beide Arme des Verschlußriegels (6) in das zugehörige Riegelelement (8) eingreifen.

3. Haushaltsgerät nach Anspruch 2, dadurch gekennzeichnet, daß die Auflager (9) aus je einem in einer Führungshülse (10.1) eines Auslegers (10) des Geräteunterteils (2) vertikal geführten Bolzen bestehen, der von der ihn in die Sperrstellung hebenden Druckfeder (11) umgeben ist und an seinem oberen Ende einen Auflagerkopf (9.1) aufweist, der einerseits die Auflagefläche für je ein Riegelelement (8) des Deckels (5) bildet und andererseits zur Abstützung der Druckfeder (11) dient.

4. Haushaltsgerät nach einem der Ansprüche 1 bis 3, dadurch gekennzeichnet, daß die Riegelelemente (8) säulenartige, mit das Eindringen der beiden freien Enden (6.2.) des Sperriegels (6) ermöglichenden Riegelausschnitten (8.1) versehene Körper sind, die vorzugsweise an diametral gegenüberliegenden Seiten des Deckels (5) so angeordnet sind, daß sie mit beiden freien Enden (6.2) des Verschlußriegels (6) gleichzeitig zusammenwirken.

5. Haushaltsgerät nach einem der Ansprüche 1 bis 4, dadurch gekennzeichnet, daß an dem Verschlußriegel (6) zur mechanischen Kopplung mit dem Geräteschalter (7) eine Kulisse (6.5.) ausgebildet ist, die eine einen radial verlaufenden Abschnitt (6.51) und einen kreisbogenförmig verlaufenden Abschnitt (6.52) umfassende Ausnehmung aufweist, in die ein Stellzapfen (7.11) eines dem Geräteschalter (7) zugeordneten Stellhebels (7.1) so eingreift, daß der Verschlußriegel (6) durch Verdrehen des Geräteschalters (7) im Einschaltsinne in seine Verriegelungsstellung und durch gegenläufiges Verdrehen des Geräteschalters (7) im Ausschaltsinne in seine Offenstellung geschwenkt wird und daß der Eingriff des Stellzapfens (7.11) in den kreisbogenförmigen Abschnitt (6.52) der kulissenartigen Ausnehmung die Arretierung des Verschlußriegels (6) in seiner Verriegelungsstellung zur Folge hat.

6. Haushaltsgerät nach Anspruch 5, dadurch gekennzeichnet, daß der Geräteschalter (7) den Antriebsstromkreis des Gerätes (1) unterbricht, solange sein Stellzapfen (7.11) in den radial verlaufenden Abschnitt (6.51) eingreift und somit der Verschlußriegel (6) seine Offenstellung einnimmt und daß der Geräteschalter (7) den Antriebsstromkreis erst dann schließt, wenn der Stellzapfen (7.11) in den kreisbogenförmig verlaufenden Abschnitt (6.52) geschwenkt und somit der Verschlußriegel (6) in seiner den Deckel (5) verriegelnden Stellung arretiert ist.

7. Haushaltsgerät nach Anspruch 6, dadurch gekennzeichnet, daß ein dem Geräteschalter (7) zugehöriges Rastgesperre die Schaltstellungen des Geräteschalters (7), in denen sein Stellzapfen (7.11) entweder in den radial verlaufenden Abschnitt (6.51) oder in den kreisbogenförmig verlaufenden Abschnitt (6.52) der Kulisse (6.5) eingreift, fühlbar festlegt.

8. Haushaltsgerät (21) zum Bearbeiten von Nahrungsmitteln mit einem Geräteschalter (28) zum Ein bzw. Ausschalten eines von einem Elektromotor angetriebenen, rotierenden Werkzeuges, mit einem das Geräteunterteil (22) verschließenden und vor Betriebsbeginn mit diesem verriegelbaren Deckel (25), wobei die Deckelverriegelung einen Sperriegel (26) aufweist, der entweder über ein Riegelelement (25.31) den Deckel (25) verriegelt oder der über ein Sperrelement (26.1) den Geräteschalter (28) sperren kann, wobei der Sperriegel (26) mit dem Geräteschalter (28) derart gekoppelt ist, daß das Einschalten des Geräteantriebs durch den Geräteschalter (28) nur bei verriegeltem Deckel (25) möglich ist, daß bei abgenommenem Deckel (25) der Geräteschalter (28) in seiner Ausschaltstellung gesperrt ist, daß der auf das Geräteunterteil (22) aufsetzbare Deckel (25) vor Einschalten des Haushaltsgerätes (21) zuerst in eine vorgegebene Endlage gedreht werden muß und in dieser Lage durch Verschlußelemente (22.2, 25.2) gegen Abheben gesichert ist, daß der Sperriegel (26) aus einem doppelarmigen Hebel besteht, daß bei aus der Endlage herausgedrehtem Deckel (25) ein Hebelarm über das Sperrelement (26.1) mit dem Geräteschalter (28) und bei eingeschaltetem Haushaltsgerät (21) der andere Hebelarm mit dem Riegelelement (25.31) zusammenwirkt, dadurch gekennzeichnet, daß der Geräteschalter (28) als ein um eine Schalterwelle (28.4) drehbarer Drehschalter ausgebildet ist und eine Kulisse (28.1) aufweist, in die das Sperrelement (26.1) eingreift, daß die Kulisse (28.1) einen zur Schalterwelle (28.4) radial verlaufenden (28.11) und einen dazu konzentrisch verlaufenden (28.12 28.13) Abschnitt aufweist wobei der Eingriff des Sperrelements (26.1) in den radial verlaufenden Abschnitt (28.11) der Kulisse (28.1) das Arretieren des Geräteschalters (28) in der Ausschaltstellung des Gerätes (21) bewirkt, während das Eintreten des Sperrelements (26.1) in den konzentrisch verlaufenden Abschnitt (28.12, 28.13) der Kulisse (28.1) den Geräteschalter (28) für eine Drehbewegung freigibt, so daß dieser in mehrere Schaltstellungen (I, II, IL) gebracht werden kann, die verschiedenen Betriebszuständen des Haushaltgerätes (21) entsprechen.

9. Haushaltsgerät nach Anspruch 8, dadurch gekennzeichnet, daß das Riegelelement von einem am Deckel (25) ausgebildeten Kupplungszapfen (25.31) gebildet wird, der mit dem Drehen des Deckels (25) in seine Endlage in eine am Sperriegel (26) ausgebildete Kupplungsgabel (26.3) eingreift und der dabei den Sperriegel (26) um den im Gehäuseunterteil (22) angeordneten Lagerzapfen (27.1) entgegen einer den Sperriegel (26) federnd in seiner Sperrlage haltenden Speicherkraft in seine den Geräteschalter (28) freigebende Stellung schwenkt.

10. Haushaltsgerät nach Anspruch 9, dadurch gekennzeichnet, daß dem Sperriegel (26) am Eingang zur Kupplungsgabel (26.3) eine Steuerfläche (26.2) angeformt ist, die mit dem Kupplungszapfen (25.31) bei Ausgangsstellung des Sperriegels (26) so zusammenwirkt, daß beim Drehen des Deckels (25) ein Eingreifen des Kupplungszapfens (25.31) in die Kupplungsgabel (26.3) möglich ist.

11. Haushaltsgerät nach Anspruch 8 bis 10, dadurch gekennzeichnet, daß die Verschlußelemente aus wenigstens einem am Rand des Deckels (25) angebrachten Randabschnitt (25.2) und einem am Rand (25.2) des Geräteunterteils (22) ausgebildeten Wulst (22.2) gebildet sind, wobei der Randabschnitt (25.2) und der Wulst (22.2) in der Endlage des Deckels (25) bajonettver schlußartig ineinandergreifen und den Deckel (25) am Geräteunterteil (22) festhalten.

12. Haushaltsgerät nach Anspruch 8, dadurch gekennzeichnet, daß die Drehebene des Geräteschalters (28) im wesentlichen parallel zu denen des Sperriegels (26) und des Deckels (25) verläuft.

**Revendications**

1. Appareil ménager (1) comprenant un commutateur (7) pour la mise en marche et l'arrêt d'un outil rotatif entraîné par un moteur électrique, un couvercle (5) fermant le socle (2) de l'appareil et verrouillé sur celui-ci avant le début du fonctionnement, le dispositif de verrouillage du couvercle comportant un verrou de fermeture (6) qui, soit verrouille le couvercle (5) par l'intermédiaire d'un élément de verrouillage (8), soit peut bloquer le commutateur (7) par l'intermédiaire d'un élément de blocage (9), ce qui nécessite le passage vers le bas du couvercle (5), à l'encontre d'une précontrainte dè l'élément de blocage (9), le verrou de fermeture (6) étant accouplé au commutateur (7) de manière que l'enclenchement de l'entraînement de l'appareil par le commutateur (7) soit possible seulement quand le couvercle (5) est verrouillé et que, quand le couvercle (5) est retiré, le commutateur (7) soit bloqué à sa position de coupure, caractérisé en ce que l'appareil ménager (1) est enclenchable seulement lorsque le couvercle (5) est pressé vers le bas, que le verrou de fermeture (6) est un levier du premier genre dont l'un des deux bras (6.2) coopère avec l'un des deux éléments de verrouillage (8) et l'autre bras (6.2) du levier coopère avec l'autre élément de verrouillage (8), tandis que, quand le couvercle (5) est retiré, l'un des bras (6.2) coopère avec l'un des deux éléments de blocage (9) et l'autre bras (6.2) du levier coopère avec l'autre élément de blocage (9).

2. Appareil ménager selon a revendication 1, caractérisé en ce que les éléments de verrouillage (8) sur le couvercle (5) et les éléments de blocage (9) sur le socle (2) de l'appareil sont réalisés déplaçables dans la direction de mouvement du couvercle (5), que les éléments de blocage (9) sont précontraints par des ressorts de compression (11) en sens contraire à la direction de fermeture du couvercle (5) et sont réalisés comme des appuis pour les éléments de verrouillage (8) et que, lors du passage vers le bas du couvercle (5) à l'encontre des forces élastiques, les éléments de blocage (9) sont déplacés vers le bas à tel point que le verrou de fermeture (6) est libéré, de sorte que le commutateur (7) peut être amené à sa position de fermeture, la rotation du commutateur (7) s'accompagnant de la pénétration des deux bras du verrou de fermeture (6) dans l'élément de verrouillage (8).

3. Appareil ménager selon la revendication 2, caractérisé en ce que les appuis (9) sont constitués chacun par un axe guidé verticalement dans une douille de guidage (10.1) d'une patte (10) du socle (2), axe qui est entouré par le ressort de compression (11) le soulevant dans la position de blocage et présente à son extrémité supérieure une tête d'appui (9.1) qui d'une part constitue la face d'appui d'un élément de verrouillage (8) du couvercle (8) et d'autre part sert d'appui au ressort de compression (11).

4. Appareil ménager selon une quelconque des revendications 1 à 3, caractérisé en ce que les éléments de verrouillage (8) sont des colonnes munies d'encoches de verrouillage (8.1) permettant la pénétration des deux extrémités libres (6.2) du verrou de fermeture (6) et disposées de préférence sur des côtés diamétralement opposés du couvercle (5) de façon à interagir simultanément avec les deux extrémités libres (6.2) du verrou de fermeture (6).

5. Appareil ménager selon une quelconque des revendication 1 à 4, caractérisé en ce qu'une coulisse (6.5) est formée sur le verrou de fermeture (6) pour l'accouplement mécanique au commutateur (7), coulisse qui comporte un évidement présentant un secteur orienté radialement (6.51) et un secteur en arc de cercle (6.52) et dans lequel un tenon (7.11) d'un levier de réglage (7.1) affecté au commutateur (7) s'engage de façon à faire pivoter le verrou de fermeture (6) dans sa position de verrouillage, par rotation du commutateur (7) dans le sens de la mise en marche, et dans sa position d'ouverture par rotation du commutateur (7) dans le sens inverse de coupure, et que l'engagement du tenon de réglage (7.11) dans le secteur en arc de cercle (6.52) de l'évidement de la coulisse entraîne le blocage du verrou de fermeture (6) dans sa position de verrouillage.

6. Appareil ménager selon la revendication 5, caractérisé en ce que le commutateur (7) interrompt le circuit d'entraînement de l'appareil (1) tant que son tenon de réglage (7.11) est engagé dans le secteur radial (6.51) de la coulisse, de sorte que le verrou de fermeture (6) occupe sa position d'ouverture, et que le commutateur (7) ne ferme le circuit d'entraînement que quand le tenon de réglage (7.11) est introduit par pivotement dans le secteur en arc de cercle (6.52) de la coulisse, de sorte que le verrou de fermeture (6) est bloqué dans sa position de verrouillage du couvercle (5).

7. Appareil ménager selon la revendication 6, caractérisé par un encliquetage affecté au commutateur (7), dont il bloque de façon perceptible les positions dans lesquelles son tenon de réglage (7.11) s'engage soit dans le secteur radial (6.51), soit dans le secteur en arc de cercle (6.52) de l'évidement de la coullisse (6.5).

8. Appareil ménager (21) pour la préparation d'aliments comprenant un commutateur (28) pour la mise en marche et l'arrêt d'un outil rotatif entraîné par un moteur électrique, un couvercle (25) fermant le socle (22) de l'appareil et verrouillé sur celuici avant le début du fonctionnement, le dispositif de verrouillage du couvercle comportant un verrou de sûreté (26) qui, soit verrouille le couvercle (25) par l'intermédiaire d'un élément de verrouillage (25.31), soit peut bloquer le commutateur (28) par l'intermédiaire d'un élément de blocage (26.1), le verrou de sûreté (26) étant accouplé au commutateur (28) de manière que l'enclenchement de l'entraînement de l'appareil par le commutateur (28) soit possible seulement quand le couvercle (25) est verrouillé, que le commutateur (28) soit bloqué à sa position de coupure lorsque le couvercle (25) est retiré, que le couvercle (25), pouvant être mis en place sur le socle (22) de l'appareil, doive d'abord, avant l'enclenchement de l'appareil ménager (21), être tourné à une position de fin de course préfixée et être empêché d'être soulevé à cette position par des éléments de fermeture (22.2, 25.2), le levier de sûreté (26) étant un levier du premier genre dont un bras coopère par l'intermédiaire de l'élément de blocage (26.1) avec le commutateur (28) lorsque le couvercle (25) est tourné hors de la position de fin de course et dont l'autre bras coopère avec l'élément de verrouillage (25.31) lorsque l'appareil ménager (21) est enclenché, caractérisé en ce que le commutateur (28) est un commutateur rotatif autour d'un axe de commutation (28.4) et présente une coulisse (28.1) dans laquelle est engagé l'élément de blocage (26.1), que la coulisse (28.1) présente un secteur (28.11) orienté radialement par rapport à l'axe de commutation (28.4) es un secteur (28.12, 28.13) s'étendant concentriquement par rapport à cet axe, l'engagement de l'élément de blocage (26.1) dans le secteur radial (28.11) de la coulisse (28.1) produisant le blocage du commutateur (28) à la position d'arrêt de l'appareil (21), tandis que l'engagement de l'élément de blocage (26.1) dans le secteur concentrique (28.12, 28.13) de la coulisse (28.1) libère le commutateur (28) pour un mouvement de rotation, de sorte qu'il peut être amené à plusieurs positions (I, II, IL) correspondant à différents modes de fonctionnement de l'appareil ménager (21).

9. Appareil ménager selon la revendication 8, caractérisé en ce que l'élément de verrouillage est constitué par un tenon d'accouplement (25.31) formé sur le couvercle (25), qui s'engage, lors de la rotation du couvercle (25) à sa position de fin de course, dans une fourchette d'accouplement (26.3) formée sur le verrou de sûreté (26) et qui, lors de ce mouvement, fait pivoter le verrou (26) sur un tourillon (27.1), disposé dans le socle (22) de l'appareil, dans sa position libérant le commutateur (28), à l'encontre de la force accumulée maintenant le verrou (26) élastiquement à sa position de blocage.

10. Appareil ménager selon la revendication 9, caractérisé en ce que le verrou de sûreté (26) présente, à l'entrée de la fourchette d'accouplement (26.3), une face de commande (26.2) qui interagit avec le tenon d'accouplement (25.3), à la position de départ du verrou (26), de manière que le tenon (25.31) puisse entrer dans la fourchette d'accouplement (26.3) à la rotation du couvercle (25).

11. Appareil ménager selon les revendications 8 à 10, caractérisé en ce que les éléments de fermeture sont constitués par au moins un secteur de bord (25.2) disposé sur le bord du couvercle (25) et un bourrelet (22.2) formé sur le bord du socle (22) de l'appareil, le secteur de bord (25.2) et le bourrelet (22.2) s'accouplant mutuellement à la façon d'un joint à baionnette et maintenant le couvercle sur le socle (22) de l'appareil à la position de fin de course du couvercle (25).

12. Appareil ménager selon la revendication 8, caractérisé en ce que le plan de rotation du commutateur est sensiblement parallèle à ceux du verrou de sûreté (26) et du couvercle (25).

**Claims**

1. A domestic appliance (1) with an appliance switch (7) for activating or deactivating a rotary tool driven by an electric motor, with a cover (5) closing the base (2) of the appliance and lockable therewith prior to the start of operation, with the locking arrangement of the cover including a locking bolt (6) which either locks the cover (5) by means of a bolt element (8) or is capable of preventing the operation of the appliance switch (7) by means of an interlocking element (9), with the cover (5) being required to be pressed down against a biasing action of the interlocking element (9) and the locking bolt (6) being coupled to the appliance switch (7) in such fashion that operation of the appliance drive by the appliance switch (7) is only possible when the cover (5) is locked in place, and that with the cover (5) removed the appliance switch (7) is locked in its off position, characterized in that the domestic appliance (1) can only be turned on when the cover (5) is in pushed down position, that the locking bolt (6) is comprised of a two-armed lever, with one of the two lever arms (6.2) cooperating with one of the two bolt elements (8) and the other lever arm (6.2) cooperating with the other bolt element (8) when the appliance (1) is turned on, while, with the cover (5) removed, the one lever arm (6.2) cooperates with one of the two interlocking elements (9) and the other lever arm (6.2) cooperates with the other interlocking element (9).

2. The domestic appliance as claimed in claim 1, characterized in that the bolt elements (8) on the cover (5) and the interlocking elements (9) on the appliance base (2) are arranged to be slidable in the direction of movement of the cover (5), that the interlocking elements (9) are biased in opposition to the closing direction of the cover (5) by means of compression springs (11) and are configured to serve as supporting means for the bolt elements (8), and that, with the cover (5) being pushed down against the spring forces, the interlocking elements (9) are moved downwards by such an extent that the locking bolt (6) is released enabling the appliance switch (7) to be brought to its on position, with the two arms of the locking bolt (6) engaging the associated bolt element (8) as the appliance switch (7) is being turned.

3. The domestic appliance as claimed in claim 2, characterized in that the supporting means (9) comprise each a bolt vertically guided in a guide sleeve (10.1) of a bracket (10) of the appliance base (2), said bolt being surrounded by the compression spring (11) raising it to the locked position, the bolt including at its upper end a support head (9.1) providing the bearing surface for a respective one of the bolt elements (8) of the cover (5) on the one side and for the compression spring (11) on the other side.

4. The domestic appliance as claimed in any one of the claims 1 to 3, characterized in that the bolt elements (8) are columnar bodies provided with suitable cutouts (8.1) permitting the two free ends (6.2) of the locking bolt (6) to extend therethrough, said bodies being preferably arranged at diametrically opposite ends of the cover (5) in such a manner as to cooperate with the two free ends (6.2) of the locking bolt (6) simultaneously.

5. The domestic appliance as claimed in any one of the claims 1 to 4, characterized in that a link structure (6.5) is formed on the locking bolt (6) to provide a mechanical coupling with the appliance switch (7), said link structure including a recess having a radially extending portion (6.51) and a portion (6.52) extending in the manner of a circular arc, said recess being engaged by an actuating pin (7.11) of an actuating lever (7.1) associated with the appliance switch (7), the engagement being such that turning of the appliance switch (7) to the on position causes the locking bolt (6) to be pivoted to its locked position and that turning of the appliance switch (7) in the opposite direction to the off position causes the locking bolt to be pivoted to its open position, and that the engagement of the actuating pin (7.11) in the circular-arc portion (6.52) of the link-type recess causes the locking bolt (6) to be secured in its locked position.

6. The domestic appliance as claimed in claim 5, characterized in that the appliance switch (7) interrupts the driving circuit of the appliance (1) as long as its actuating pin (7.11) is in engagement with the radially extending portion (6.51) as a result of which the locking bolt (6) assumes its open position, and that the appliance switch (7) does not close the driving circuit until the actuating pin (7.11) has executed a pivot motion into the portion (6.52) extending in the manner of a circular arc, as a result of which the locking bolt (6) is secured in its locked position in which the cover (5) is locked in place.

7. The domestic appliance as claimed in claim 6, characterized in that a click-stop device associated with the appliance switch (7) sensibly determines the switch positions of the appliance switch (7) in which its actuating pin (7.11) engages either the radially extending portion (6.51) of the link structure (6.5) or its portion (6.52) extending in the manner of a circular arc.

8. A domestic appliance (21) for processing food materials, with an appliance switch (28) for activating or deactivating a rotary tool driven by an electric motor, with a cover (25) closing the appliance base (22) and lockable therewith prior to the start of operation, with the locking arrangement of the cover including a locking bolt (26) which either locks the cover (25) by means of a bolt element (25.31) or is capable of preventing the operation of the appliance switch (28) by means of an interlocking element (26.1), with the locking bolt (26) being coupled to the appliance switch (28) in such fashion that operation of appliance drive by the appliance switch (28) is only possible when the cover (25) is locked in place, that with the cover (25) removed the appliance switch (28) is locked in its off position, that the cover (25) seatable on the appliance base (22) is required to be turned to a predetermined limit position prior to turning the domestic appliance (21) on in which position it is securely locked against unseating by closure elements (22.2, 25.2), that the locking bolt (26) is comprised of a two-armed lever, that with the cover (25) turned out of its limit position one lever arm cooperates with the appliance switch (28) by means of the interlocking element (26.1) while, with the domestic appliance (21) turned on, the other lever arm cooperates with the bolt element (25.31), characterized in that the appliance switch (28) is configured as a rotary switch rotatable about a switch shaft (28.4) and includes a link structure (28.1) for engagement by the interlocking element (26.1), that said link structure (28.1) includes a portion (28.11) extending radially to the switch shaft (28.4) and a portion (28.12, 28.13) extending concentrically therewith, with the engaging action of the interlocking element (26.1) into the radially extending portion (28.11) of the link structure (28.1) causing the appliance switch (28) to be locked in the off position of the appliance (21), while the engagement of the interlocking element (26.1) into the concentrically extending portion (28.12, 28.13) of the link structure (28.1) releases the appliance switch (28) for a rotary movement, enabling it to be brought into several switch positions (I, II, IL) corresponding to different operating conditions of the domestic appliance (21).

9. The domestic appliance as claimed in claim 8, characterized in that the bolt element is formed by a coupling pin (25.31) provided on the cover (25) and engaging into a coupling fork structure (26.3) formed on the locking bolt (26) as the cover (25) is turned to its limit position, thereby pivoting the locking bolt (26) about the bearing pin (27.1) arranged in the appliance base (22) into a position in which it releases the appliance switch (28), such pivotal motion occurring in opposition to a stored force resiliently holding the locking bolt (26) in its locked position.

10. The domestic appliance as claimed in claim 9, characterized in that a control surface (26.2) is integrally formed on the locking bolt (26) at the entry to the coupling fork structure (26.3), said control surface cooperating with the coupling pin (25.31) in the starting position of the locking bolt (26) in such a manner that turning of the cover (25) enables the coupling pin (25.31) to engage into the coupling fork structure (26.3).

11. The domestic appliance as claimed in claims 8 to 10, characterized in that the closure elements are formed of at least one edge portion (25.2) provided on the edge of the cover (25) and one bead (22.2) provided at the edge (25.2) of the appliance base (22), with the edge portion (25.2) and the bead (22.2) interengaging in bayonet fashion in the limit position of the cover (25), thereby holding the cover (25) securely in place on the appliance base (22).

12. The domestic appliance as claimed in claim 8, characterized in that the plane of rotation of the appliance switch (28) extends substantially parallel to the planes of the locking bolt (26) and the cover (25).

FIG.1

FIG.2

FIG.3

FIG.4

FIG.5

FIG. 7

FIG. 8